# EUROPEAN PATENT APPLICATION

(11) **EP 1 571 772 A2**
(43) Date of publication of application: **07.09.2005**
(21) Application number: 05004934.5
(22) Date of filing: 07.03.2005
(51) Int. Cl.: H04L 1/16

(54) **Apparatus and method for transmitting and receiving a data frame processing result in an OFDMA mobile communication**

(30) Priority: 05.03.2004 KR 2004015039
(71) Applicant: SAMSUNG ELECTRONICS CO., LTD., Gyeonggi-do (KR)
(72) Inventor: Huh, Hoon, Yeongtong-gu, Suwon-si, Gyeonggi-do (KR); Jeon, Jae-Ho, Yeongtong-gu, Suwon-si, Gyeonggi-do (KR); Yoon, Soon-Young, Yeongtong-gu, Suwon-si, Gyeonggi-do (KR); Maeng, Seung-Joo, Yeongtong-gu, Suwon-si, Gyeonggi-do (KR); Cho, Jae-Hee, Yeongtong-gu, Suwon-si, Gyeonggi-do (KR); Oh, Jeong-Tae, Yeongtong-gu, Suwon-si, Gyeonggi-do (KR); Hwang, In-Seok, Yeongtong-gu, Suwon-si, Gyeonggi-do (KR)
(74) Representative: Grünecker, Kinkeldey, Stockmair & Schwanhäusser Anwaltssozietät

(57) **Abstract**

The present invention proposes an apparatus and a method for supporting and ARQ or H-ARQ scheme in an OFDMA mobile communications system. In one embodiment, a separate physical channel is used for acknowledgement signals, which has the same structure as the commonly used channels of the OFDMA system.

## Description

### BACKGROUND OF THE INVENTION

### 1. Field of the Invention

The present invention relates generally to a mobile communication system supporting an Orthogonal Frequency Division Multiple Access (OFDMA) scheme (hereinafter referred to as an "OFDMA mobile communication system"), and in particular, to an apparatus and method for transmitting and receiving the data frame processing result in an OFDMA mobile communication system.

### 2. Description of the Related Art

In mobile communication, the amount of data and its processing speed required by users is constantly increasing. An attempt to transmit data over a wireless channel at high speed to meet the requirements may an increase a bit error rate (BER) due to multipath fading and Doppler spread. Therefore, there is a demand for a wireless access scheme suitable to transmit data over a wireless channel at high speed.
A spread spectrum modulation scheme having advantages of high throughput and low detection probability is popularly used as the wireless access scheme. The spread spectrum scheme is generally classified into a Direct Sequence Spread Spectrum (DSSS) scheme and a Frequency Hopping Spread Spectrum (FHSS) scheme.

The DSSS scheme can actively handle a multipath phenomenon occurring in a wireless channel using a Rake receiver for multipath diversity of a channel. The DSSS scheme can be efficiently used at a transfer rate up to 10 Mbps. However, during high-speed data transmission at a higher transfer rate, inter-chip interference increases causing an abrupt increase in hardware complexity of the DSSS scheme. Also, the DSSS scheme has a limitation in user capacity due to multiuser interference.

The FHSS scheme can reduce multichannel interference and narrowband impulse nose because it transmits data, hopping between frequencies with random sequences. In the FHSS scheme, correct coherence between a transmission side and a reception side is very important, but it is difficult to achieve coherent detection during high-speed data transmission.

An Orthogonal Frequency Division Multiplexing (OFDM) scheme is a scheme used for high-speed data transmission in a wired/wireless channel, and a large amount of research is being conducted thereon. The OFDM scheme has high frequency efficiency because it uses a plurality of carriers having mutual orthogonality. Because a process of modulating or demodulating the plurality of carriers in a transmitter or receiver is equivalent to a process of performing Inverse Discrete Fourier Transform (IDFT) and Discrete Fourier Transform (DFT), the OFDM scheme can implement a fast transmitter or receiver using Inverse Fast Fourier Transform (IFFT) and Fast Fourier Transform (FFT). Because the OFDM scheme is appropriate for high-speed data transmission, it has been adopted as a standard scheme for Broadband Wireless Access (BWA), Digital Audio Broadcasting (DAB), Digital Terrestrial Television Broadcasting (DTTB), Asymmetric Digital Subscriber Line (ADSL), and Very high speed Digital Subscriber Line (VDSL). A frequency-axis structure of an OFDM symbol based on the OFDM scheme is defined with subcarriers. The subcarriers are divided into data subcarriers used for data transmission, pilot subcarriers used for transmitting symbols in a pattern predefmed for various estimation purposes, and null subcarriers corresponding to subcarriers belonging to a guard band and DC subcarriers. Among them, the data subcarriers and the pilot subcarriers, which do not belong to the null subcarriers, are referred to as "effective subcarriers."

An Orthogonal Frequency Division Multiple Access (OFDMA) scheme assigns different subcarriers to a plurality of users with the foregoing OFDM scheme, thereby multiplexing a plurality of user signals to the same OFDM symbol. The OFDMA scheme has been utilized as a multiaccess scheme in an OFDMA mode of a broadband wireless access standard. In the OFDMA scheme, an effective subcarrier group is divided into a plurality of subgroups, and each subgroup is called a "subchannel." Subcarriers included in each subchannel may not adjoin each other in a frequency axis. By assigning each subchannel to users, an OFDMA system can simultaneously provide a service to a plurality of users.

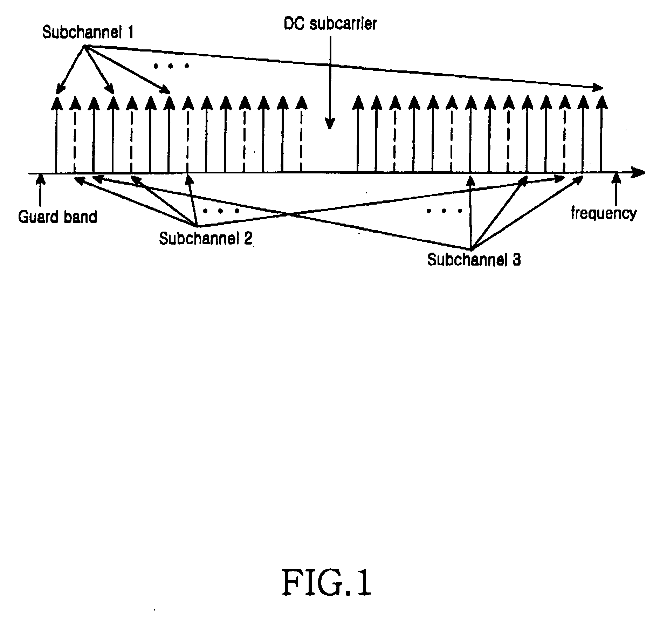

FIG. 1 illustrates an example of a conventional method for assigning subchannels in the OFDMA scheme.

A wireless channel has a possibility that an error will occur in a transmitted packet due to multipath fading, multiuser interference, and noise. A method for solving this problem includes a Forward Error Correction (FEC) scheme for reducing an error rate by additionally sending redundancy information, an Automatic Repeat reQuest (ARQ) scheme in which a receiver requests for retransmission of a defective packet upon detecting an error, and a Hybrid ARQ (H-ARQ) scheme, which is a combined scheme of the above two schemes. In the ARQ scheme, a receiver transmits an Acknowledgement/Not Acknowledgement (ACK/NACK) signal in order to inform a transmitter if there is an error in a received packet. If the transmitter receives an ACK signal indicating that the receiver has successfully received a corresponding packet, it transmits the next packet. However, upon receiving a NACK signal, the transmitter retransmits the corresponding packet.

When the ARQ or H-ARQ scheme is used in real-time data communication such as Voice over Internet Protocol (VoIP), visual telephone, and moving-picture reception, fast transmission of an ACK signal and a reduction in overhead are essential. That is, in the real-time data communication, because fast retransmission should be achieved, transmission/reception should be achieved on a small packet basis and an ACK signal should be transmitted fast. This causes an increase in transmission frequency of the ACK signal, thereby creating the necessity to reduce overhead.

In the H-ARQ scheme, because a receiver stores a received defective packet, if any, and, upon receiving a retransmitted packet, combines the defective packet with the retransmitted packet, the receiver requires a memory for storing the packet. Because of a limited capacity of the memory, it is necessary to rapidly transmit and receive an ACK signal, thereby enabling fast retransmission. In addition, because every packet transmission is followed by transmission of an ACK signal, it is necessary to reduce overhead as much as possible.

Commonly, in an OFDMA mobile communication system, an ACK signal for the ARQ scheme is transmitted with an ARQ-ACK message. Table 1 illustrates a format of an ARQ-ACK message.

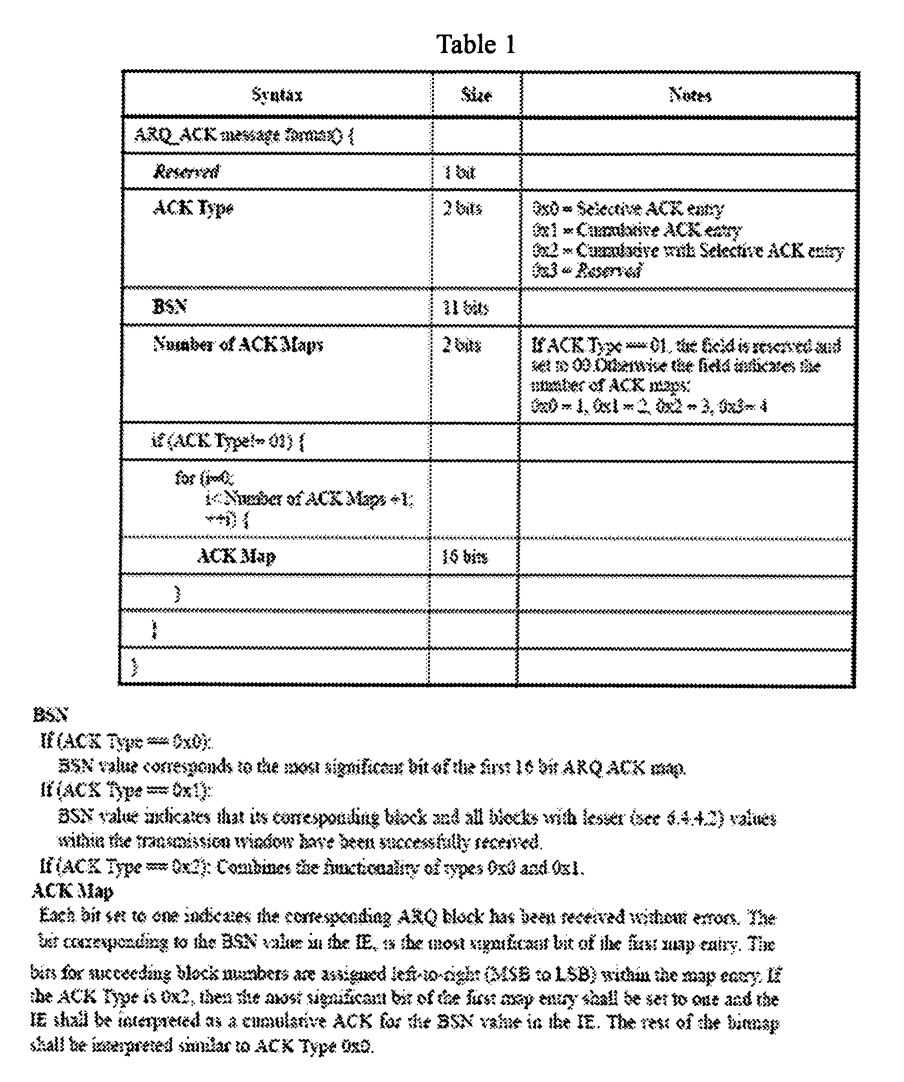

The ARQ-ACK message can have a minimum of 16 bits and a maximum of 80 bits according to "Number of ACK Maps." Such an ACK message is not suitable for the foregoing real-time data communication and H-ARQ scheme. As for the ACK message, a MAC layer of a transmitter generates a message and a PHY layer converts the message into a physical signal before transmission. In response, a PHY layer of a receiver restores the ACK message and a MAC layer processes the restored ACK message. Therefore, there is a processing delay caused by generation, encoding, and decoding of the ACK message. That is, despite the necessary rapid and frequent transmission, the long length of the ACK message gives rise to a serious overhead problem.

Therefore, in order to decrease a processing time of an ACK signal and reduce overhead, a separate physical channel for an ACK signal is required. However, in order to enable coherent detection in a process of modulating or demodulating an ACK signal, it is necessary to transmit a pilot. In this case, resources assigned to the pilot cannot be used for data transmission, inevitably causing a reduction in data capacity.

### SUMMARY OF THE INVENTION

It is, therefore, an object of the present invention to provide an apparatus and method for creating a physical channel for transmitting a processing result on a received data frame in an OFDMA mobile communication system.

It is another object of the present invention to provide an apparatus and method for transmitting and receiving a processing result on a received data frame by an orthogonal modulation technique in an OFDMA mobile communication system.

It is further another object of the present invention to provide an apparatus and method for assigning a subchannel for transmitting a processing result on a received data frame in an OFDMA mobile communication system.

It is yet another object of the present invention to provide an apparatus and method for orthogonally modulating a processing result on a received frame in an OFDMA mobile communication system.

It is still another object of the present invention to provide an apparatus and method for demodulating a processing result on an orthogonally modulated data frame in an OFDMA mobile communication system.

It is still another object of the present invention to provide an apparatus and method for creating an ACK channel using a non-coherent detection scheme in which it is not necessary to transmit a separate pilot for an ACK channel, thereby minimizing a waste of resources.

In accordance with one aspect of the present invention, there is provided a method for transmitting a processing result on a received data frame in an Orthogonal Frequency Division Multiple Access (OFDMA) mobile communication system. The method comprises the steps of selecting an orthogonal codeword corresponding to the processing result among predetermined orthogonal codewords and transmitting the selected orthogonal codeword through at least one subcarrier group assigned for transmitting the processing result.

In accordance with another aspect of the present invention, there is provided a transmission apparatus for transmitting a processing result on a received data frame in an Orthogonal Frequency Division Multiple Access (OFDMA) mobile communication system. The apparatus comprises an orthogonal modulator for selecting an orthogonal codeword corresponding to the processing result among predetermined orthogonal codewords and a subcarrier assigner for assigning at least one subcarrier group for transmitting the selected orthogonal codeword.

In accordance with further another aspect of the present invention, there is provided a method for receiving a processing result on a transmitted data frame in an Orthogonal Frequency Division Multiple Access (OFDMA) mobile communication system. The method comprises the steps of extracting an orthogonal-modulated orthogonal codeword from at least one subcarrier group assigned for transmitting the processing result and checking the processing result according to an orthogonal codeword having a largest correlation value with the extracted orthogonal codeword among predetermined orthogonal codewords.

In accordance with still another aspect of the present invention, there is provided an apparatus for receiving a processing result on a transmitted data frame in an Orthogonal Frequency Division Multiple Access (OFDMA) mobile communication system. The apparatus comprises a subcarrier extractor for extracting an orthogonal-modulated orthogonal codeword from at least one subcarrier group assigned for transmitting the processing result and an orthogonal demodulator for determining the processing result according to an orthogonal codeword having a largest correlation value with the extracted orthogonal codeword among predetermined orthogonal codewords, wherein a length of the orthogonal codeword is determined according to a number of symbol units included in the at least one subcarrier group, and the predetermined orthogonal codewords are orthogonal with each other.

### BRIEF DESCRIPTION OF THE DRAWINGS

The above and other objects, features, and advantages of the present invention will become more apparent from the following detailed description when taken in conjunction with the accompanying drawings in which:
FIG. 1 is a diagram illustrating an example of a conventional method for assigning subchannels in a common OFDMA scheme;
FIG. 2 is a diagram illustrating an example of a subchannel structure according to an embodiment of the present invention;
FIG. 3 is a block diagram illustrating a structure of a transmission apparatus according to an embodiment of the present invention;
FIG. 4 is a diagram illustrating an example of the orthogonal modulator illustrated in FIG. 3;
FIGs. 5A and 5B are diagrams illustrating a method for assigning modulation symbols of a response signal and subcarriers according to an embodiment of the present invention;
FIG. 6 is a block diagram illustrating a reception apparatus according to an embodiment of the present invention;
FIG. 7 illustrates an example of the orthogonal demodulator illustrated in FIG. 6; and
FIG. 8 is a flowchart illustrating transmission and reception operations according to an embodiment of the present invention.

### DETAILED DESCRIPTION OF THE PREFERRED EMBODIMENT

Preferred embodiments of the present invention will now be described in detail herein below with reference to the annexed drawings. In the following description, a detailed description of known functions and configurations incorporated herein has been omitted for conciseness.

### A. Outline of the Invention

The present invention proposes an apparatus and method for transmitting and receiving a response signal for supporting an ARQ or H-ARQ scheme in an OFDMA mobile communication system. Commonly, a response signal is used to indicate a success or failure in decoding of a received packet. An ACK signal is used as the response signal for successful decoding of a received packet, and a NACK signal is used as the response signal for a failed decoding of the received packet. For example, the ACK signal can be expressed with a value '0', while the NACK signal can be expressed with a value '1'. Accordingly, the response signal can be expressed with a 1-bit value.

The response signal should be rapidly fed back and repeatedly transmitted every frame. Accordingly, a processing time for which a receiver receiving a packet generates a response signal in response to a particular packet should be short. In addition, it is necessary to minimize overhead caused by the response signal.

Therefore, an embodiment of the present invention will define a separate physical channel for transmitting the response signal in order to reduce a processing time required for generating the response signal in an OFDMA mobile communication system. Herein, the separately defined physical channel for transmitting the response signal will be referred to as a "response channel." The response channel should have a channel structure commonly used in the OFDMA mobile communication system.

An embodiment of the present invention applies a non-coherent detection scheme for the response channel in order to minimize overhead caused by the response signal. That is, the present invention uses an orthogonal modulation scheme as a non-coherent modulation scheme to enable the non-coherent detection. The orthogonal modulation scheme in the present invention refers to a scheme of using different orthogonal codes having mutual orthogonality as the response signal. That is, the orthogonal modulation scheme selects two different orthogonal codes, wherein one of the two orthogonal codes replaces an ACK signal and the other orthogonal code replaces a NACK signal. Walsh codes used for channel separation in a CDMA scheme can be used as the orthogonal codes.

Finally, the present invention provides a scheme for transmitting a response signal over an assigned response channel. Here, a plurality of subcarrier groups are repeatedly assigned in a frequency axis as the response channel such that a modulated response signal can obtain a frequency diversity gain. When a plurality of subcarrier groups are repeatedly assigned as the response channel in this manner, the same orthogonal code can be modified for the respective subchannel groups before being transmitted.

For example, if an orthogonal code "+1, +1, -1, -1, +1, +1" is transmitted through a first subcarrier group, a reverse orthogonal code "-1, -1, +1, +1, -1, -1" can be transmitted through the next subcarrier group. In this manner, it is possible to variously modifying an orthogonal code to be transmitted through the respective subcarrier groups. When a length of an orthogonal code that can be transmitted through one subcarrier group is not identical to a length of an orthogonal code to be actually transmitted, a separate operation for matching the lengths can be performed.

For example, if the length of an orthogonal code to be actually transmitted is longer, a predetermined number of bits can be punctured therefrom. Otherwise, if the length of an orthogonal code to be actually transmitted is shorter, a predetermined number of bits can be repeated. Herein, orthogonality between orthogonal codes replacing the response signal should be maintained.

### B. Embodiment of the Invention

A detailed description will now be made of a transmission apparatus for transmitting a processing result (ACK/NACK) on a received data frame through an assigned subchannel using an orthogonal modulation scheme and a reception apparatus for receiving an orthogonal-modulated data frame processing result (ACK/NACK) through a subchannel, both proposed according to an embodiment of the present invention. Accordingly, the present invention will give a clear defmition of orthogonal codes to be used for orthogonal-modulating a data frame processing result and of a subchannel for transmitting an orthogonal-modulated data frame processing result. In addition, the present invention proposes a detailed structure for orthogonal-modulating a data frame processing result in the transmission apparatus and a detailed structure for demodulating an orthogonal-modulated data processing result in the reception apparatus.

### B-1. Structure and Operation of Transmitter

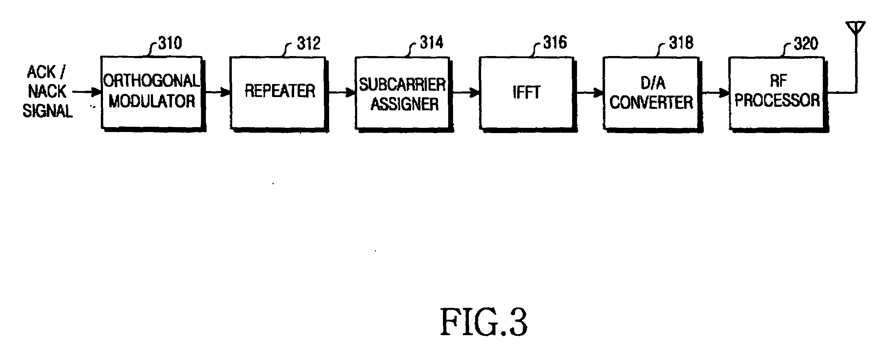

FIG. 3 is a block diagram illustrating a structure of a transmission apparatus according to an embodiment of the present invention. The transmission apparatus of FIG. 3 receives a response signal (ACK/NACK signal) and outputs a modulation symbol stream through orthogonal modulation. The transmission apparatus is configured such that it generates a plurality of modulation symbol streams and transmits the modulation symbol streams through an assigned subchannel.

Referring to FIG. 3, a response signal for a particular data frame is input to an orthogonal modulator 310. If reception of the particular data frame was successful, an ACK signal is received as the response signal. However, if reception of the particular data frame failed, a NACK signal is received as the response signal. The ACK signal and the NACK signal are both a 1-bit signal, and have a value of '0' or '1'. In the following description, a response signal having a value of '0' is assumed to be an ACK signal and a response signal having a value of '1' is assumed to be a NACK signal.

The orthogonal modulator 310 orthogonal-modulates the response signal and outputs a modulation symbol stream. The modulation symbol stream is generated through orthogonal modulation on the response signal with its associated orthogonal code. The orthogonal codes are previously determined for all possible types of response signals expected to be received.

For example, a first orthogonal code is predetermined for an ACK signal, and a second orthogonal code is predetermined for a NACK signal. Here, the first orthogonal code and the second orthogonal code should be orthogonal with each other. The orthogonal modulator 310 should output a modulation symbol stream having as many symbols as the number of symbol units in a subcarrier group corresponding to a response channel assigned for transmitting the response signal. Therefore, the first orthogonal code and the second orthogonal code predetermined in the orthogonal modulator 310 have a length corresponding to the number of symbols in the subcarrier group. Accordingly, a predetermined number of bits in the first and second orthogonal codes can undergo puncturing or repetition.

Alternatively, puncturing or repetition can be performed on a modulation symbol stream generated by the first orthogonal code or the second orthogonal code.

The orthogonality between the first orthogonal code and the second orthogonal code should not be damaged in a process of selecting the bits to be punctured or the bits to be repeated. If the puncturing or the repetition damages the orthogonality, a modulation symbol stream generated by the first or second orthogonal code cannot serve as a response signal. The modulation symbol stream output from the orthogonal modulator 310 by the response signal is input to a repeater 312.

The repeater 312 repeats the modulation symbol stream a predetermined number of times to acquire diversity gain in a frequency axis, thereby outputting a plurality of modulation symbol streams. The number of repetitions is determined according to the number of subcarrier groups assigned for transmitting the response signal. For example, if two subcarrier groups are assigned for a particular user, the repeater 312 outputs two modulation symbol streams. Therefore, the two modulation symbol streams will be transmitted through their associated assigned subcarrier groups, respectively.

The repeater 312 repeats the input modulation symbol stream, and can reconfigure the modulation symbol stream generated by the repetition in a predetermined pattern. The reconfiguration of the modulation symbol stream can be implemented in various ways. For example, when two subcarrier groups are assigned, the modulation symbol stream output from the orthogonal modulator 310 can be reconfigured such that respective modulation symbol streams of the output modulation symbol stream are reverse to each other. When at least two subcarrier groups are assigned, the modulation symbol stream can be reconfigured through cyclic shift or interleaving based on a predetermined pattern. For example, when a modulation symbol stream "+1 +1 -1 -1 +1 +1" is received, the repeater 312 can output different modulation symbol streams, examples of which are illustrated in Table 2.

**Table 2**

| | Modulation Symbol Stream | Remarks |
|---|---|---|
| Case 1 | -1 -1 +1 +1 -1 -1 | Sign Reversed |
| Case 2 | +1 -1 -1 +1 +1 +1 1 | Cyclic Shifted Once |
| Case 3 | -1-1+1+1+1+1 | Cyclic Shifted Twice |

The multiple modulation symbol streams output from the repeater 312 in the foregoing operation are provided to a subcarrier assigner 314. The repeater 312 outputs a plurality of modulation symbol streams to obtain frequency diversity gain.

The subcarrier assigner 314 assigns subcarrier groups through which the plurality of modulation symbol streams will be transmitted, respectively. The assignment of the subcarrier groups is achieved according to a subcarrier assignment rule determined in an OFDMA scheme.

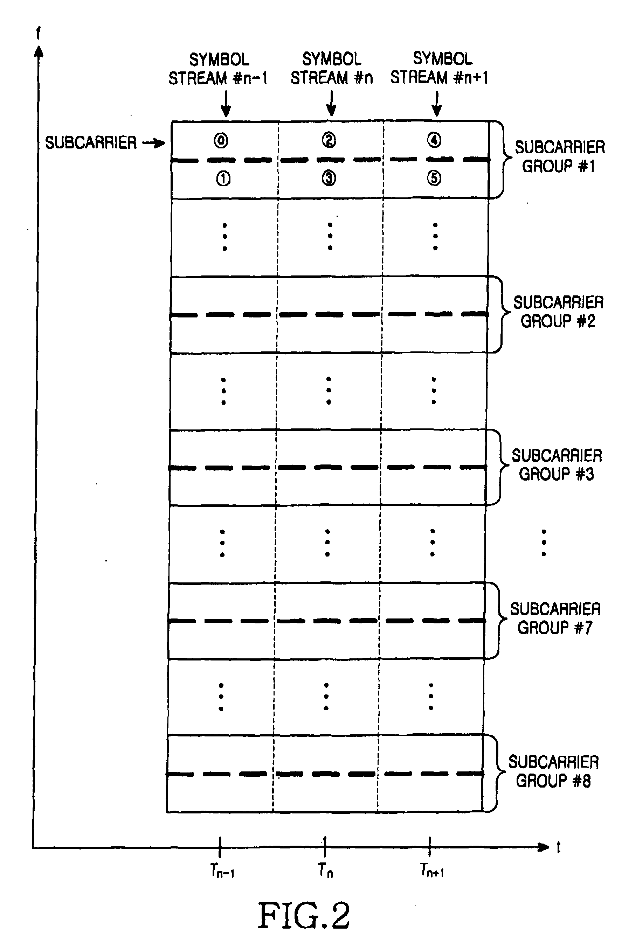

For example, referring to FIG. 2, assuming that two modulation symbol streams are received a subcarrier group #1 is assigned to one of the two modulation symbol streams, and a subcarrier group #2 is assigned to the other modulation symbol stream. The subcarrier group #1 and the subcarrier group #2 each include symbol units adjoining each other in frequency and time axes. However, the subcarrier group #1 and the subcarrier group #2 are spaced apart from each other by a predetermined gap in a frequency axis.

The subcarrier assigner 314 arranges one of the modulation symbols included in the modulation symbol stream in each of symbol units included in the assigned subcarrier group. Here, the foremost modulation symbol among the modulation symbols included in the modulation symbol stream is arranged in a position where the foremost symbol unit among the symbol units included in the subcarrier group is located in a time axis. In addition, the rearmost modulation symbol is arranged in a position where the rearmost symbol unit is located in a time axis. For example, respective modulation symbols of a modulation symbol stream to which the subcarrier group #1 is assigned are arranged such that they should be matched to the order of circled numbers in their input order.

The operation of arranging the modulation symbols in the subcarrier group can be performed by an Inverse Fast Fourier Transform block (IFFT) 316. That is, when a subcarrier group for transmitting the response signal is determined by the subcarrier assigner 314, the plurality of modulation symbol streams are provided to the IFFT 316. OFDM symbols output from the IFFT 316 are converted into an analog signal by a digital-to-analog (D/A) converter 318, and then transmitted via an antenna through a radio frequency (RF) processor 320.

### Implementation of Orthogonal Modulator

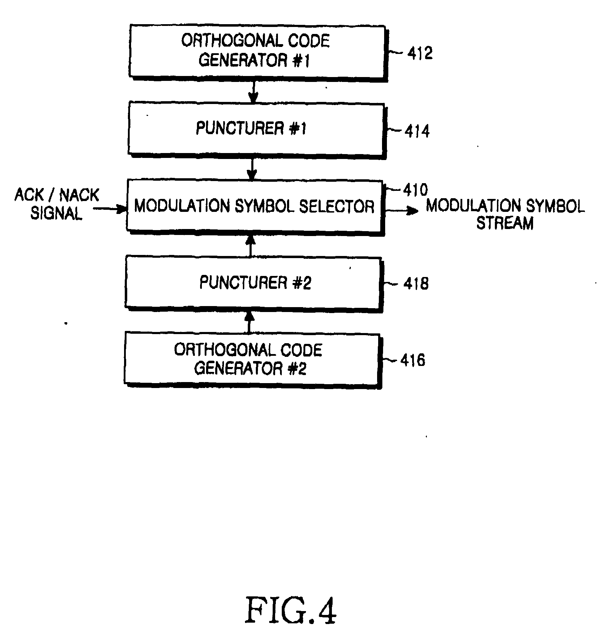

FIG. 4 illustrates an implementation of the orthogonal modulator illustrated in FIG. 3. The orthogonal modulator illustrated in FIG. 4 separately punctures two orthogonal codes generated for an ACK signal and a NACK signal, if needed, and selects one of the two punctured orthogonal codes according to an actually received response signal.

Referring to FIG. 4, a first orthogonal code generator 412 and a first puncturer 414 generate a first orthogonal codeword corresponding to an ACK signal as a response signal. A second orthogonal code generator 416 and a second puncturer 418 generate a second orthogonal codeword corresponding to a NACK signal as a response signal. The first orthogonal codeword and the second orthogonal codeword each have a predetermined number of bits that can be transmitted through one subcarrier group. That is, a length of the first and second orthogonal codewords corresponds to the number of symbol units included in one subcarrier group. Herein, the first orthogonal codeword and the second codeword are orthogonal with each other.

More specifically, the first orthogonal code generator 412 and the second orthogonal code generator 416 generate a pair of orthogonal codewords, i.e., two orthogonal codewords, from an orthogonal code set of Walsh-Hadamard. The first orthogonal code generator 412 generates an orthogonal codeword corresponding to an ACK signal having a value of '0' among the two orthogonal codewords, and the second orthogonal code generator 416 generates an orthogonal codeword corresponding to a NACK signal having a value of '1' among the two orthogonal codewords. The pair of orthogonal codewords selected from the orthogonal code set should maintain orthogonality therebetween, even though partial bits therein are punctured.

The orthogonal codeword generated from the first orthogonal code generator 412 is provided to the first puncturer 414. The first puncturer 414 determines the number of bits to be punctured, considering the number of assigned subcarriers, i.e., the number of symbol units constituting assigned one subcarrier group. Also, the second puncturer 418 determines the number of bits to be punctured, considering the number of assigned subcarriers, i.e., the number of symbol units constituting assigned one subcarrier group.

For example, assuming that a length of orthogonal codewords generated from the first and second orthogonal code generators 412 and 416 is 8 and the number of symbol units included in one subcarrier group is 6, the first and second puncturers 414 and 418 each puncture 2 bits in their input orthogonal codewords. The bits to be punctured should be selected such that orthogonality between first and second orthogonal codewords to be output from the first and second puncturers 414 and 418 can be maintained. The first and second orthogonal codewords correspond to first and second modulation symbol streams, respectively. The first and second modulation symbol streams output from the first and second puncturers 414 and 418 are provided to a modulation symbol selector 410.

The modulation symbol selector 410 receives a response signal indicating a success or failure in reception of a particular data frame, along with the first and second modulation symbol streams. Thereafter, the modulation symbol selector 410 selects one of the first and second modulation symbol streams according to the response signal, and outputs the selected modulation symbol stream. For example, if '0', indicating an ACK signal, is received as the response signal, the modulation symbol selector 410 selects the first modulation symbol stream. Otherwise, if '1', indicating a NACK signal, is received as the response signal, the modulation symbol selector 410 selects the second modulation symbol stream. Therefore, the orthogonal modulator according to an embodiment of the present invention can select a particular modulation symbol stream according to a type of an input response signal.

The orthogonal modulator proposed by the foregoing embodiment of the present invention selects a modulation symbol stream, which previously underwent puncturing. However, an orthogonal modulator proposed by an alternative embodiment selects one of first and second non-punctured orthogonal codewords according to a response signal, and then performs puncturing on the selected orthogonal codeword.

### Operation of Transmission Apparatus

A detailed description will now be made of an operation of the transmission apparatus according to an embodiment of the present invention. It will be assumed herein that a set of length-8 Walsh codes is used as an orthogonal code set and two subcarrier groups each including 6 symbol units are assigned to one user. Here, the set of Walsh codes is defined as shown below in Table 3.

**Table 3**

| Code No. | Codeword |
|---|---|
| 0 | +1 +1 +1 +1 +1 +1 +1 +1 |
| 1 | +1-1+1-1+1-1+1-1 |
| 2 | +1 +1 -1 -1 +1 +1 -1 -1 |
| 3 | +1-1-1+1+1-1-1+1 |
| 4 | +1 +1 +1+1-1-1-1-1 |
| 5 | +1-1+1-1-1+1-1+1 |
| 6 | +1+1-1-1-1-1+1+l |
| 7 | +1-1-1+1-1 +1 +1 -1 |

The codewords defined in Table 3 are orthogonal with each other. Therefore, even though any codewords making a pair are selected from the codewords illustrated in Table 3, orthogonality between the selected codewords will be maintained.

In the following description, it will be assumed that a codeword corresponding to a code number '2' is used as a first orthogonal codeword and a codeword corresponding to a code number '3' is used as a second orthogonal codeword.

In Table 3, the codeword corresponding to the code number '2' is defined as "+1 +1 -1 -1 +1 +1 -1 -1," and the codeword corresponding to the code number '3' is defined as "+1 -1 -1 +1 +1 -1 -1 +1."

Therefore, the first orthogonal code generator 412 of FIG. 4 generates an orthogonal codeword "+1 +1 -1 -1 +1 +1 -1 -1" corresponding to an ACK signal, and the second orthogonal code generator 416 of FIG. 4 generates an orthogonal codeword "+1 -1 -1 +1 +1 -1 -1 +1" corresponding to a NACK signal. The orthogonal codewords generated from the first orthogonal code generator 412 and the second orthogonal code generator 416 are provided to the first puncturer 414 and the second puncturer 418, respectively. The first puncturer 414 punctures 2 bits from the orthogonal codeword "+1 +1 -1 -1 +1 +1 -1 -1." Here, the first puncturer 414 punctures the last 2 bits, by way of example. Therefore, the first puncturer 414 outputs a first orthogonal codeword "+1 +1 -1 -1 +1 +1."

Similarly, the second puncturer 418 punctures 2 bits from the orthogonal codeword "+1 -1 -1 +1 +1 -1 -1 +1." The second puncturer 418 punctures the last 2 bits, for example. Therefore, the second puncturer 418 outputs a second orthogonal codeword "+1 -1 -1 +1 +1 -1." As described above, it can be understood that orthogonality is also maintained between the first and second orthogonal codewords punctured by the first and second puncturers 414 and 418. Meanwhile, it is clear that puncturing is not needed when the length of orthogonal codeword is equal to the length of modulation symbol stream.

The first and second orthogonal codewords generated in this way are provided to the modulation symbol selector 410. Upon receiving '0', indicating an ACK signal, as a response signal, the modulation symbol selector 410 selects the first orthogonal codeword "+1 +1 -1 -1 +1 +1" as a modulation symbol stream. However, upon receiving '1', which indicates a NACK signal, as the response signal, the modulation symbol selector 410 selects the second orthogonal codeword "+1 -1 -1 +1 +1 -1" as a modulation symbol stream.

The modulation symbol stream selected by the modulation symbol selector 410 is provided to the repeater 312 of FIG. 3. The repeater 312 repeats the modulation symbol stream once, thereby generating two equal modulation symbol streams. In addition, the repeater 312 can obtain a new modulation stream by inverting signs of modulation symbols included in one modulation symbol stream generated by the repetition. For example, if "+1 +1 -1 -1 +1 +1" is provided from the modulation symbol selector 410, the repeater 312 generates "-1 -1 +1 +1 -1 -1" obtained by inverting "+1 +1 -1 -1 +1 +1." However, if "+1 -1 -1 +1 +1 -1" is provided from the modulation symbol selector 410, the repeater 312 generates "-1 +1 +1 -1 -1 +1" obtained by inverting "+1 -1 -1 +1 +1 -1."

The two orthogonal codewords generated by the repeater 312 are provided to the subcarrier assigner 314. The subcarrier assigner 314 assigns subcarrier groups for individually transmitting the two orthogonal codewords.

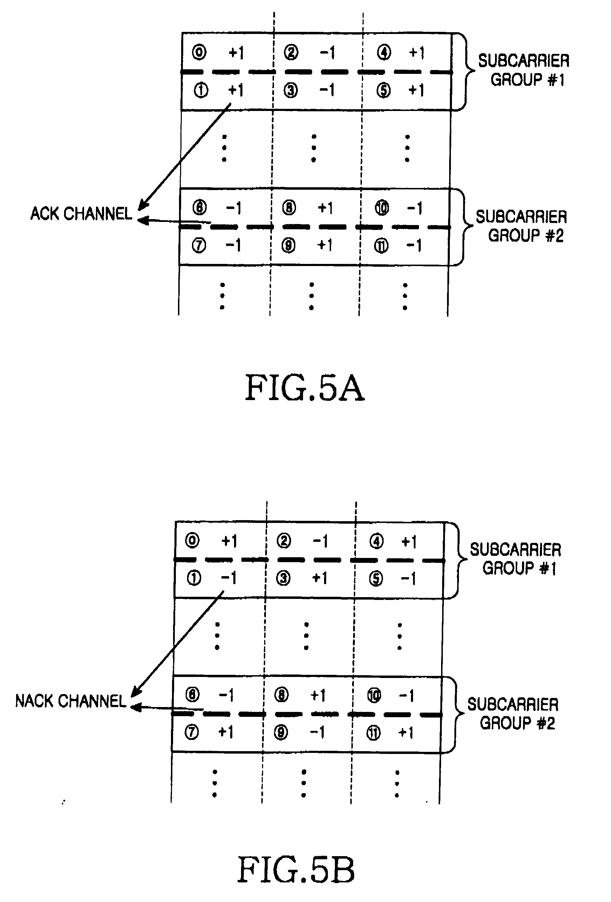

FIG. 5A illustrates an example of subcarrier groups assigned when an ACK signal is provided as a response signal, and FIG. 5B illustrates subcarrier groups assigned when a NACK signal is provided as a response signal. Referring first to FIG. 5A, a subcarrier group #1 and a subcarrier group #2 are assigned to a subchannel for transmitting an ACK signal as a response signal. That is, the subcarrier group #1 is assigned to one of the two orthogonal codewords provided from the repeater 312, and the subcarrier group #2 is assigned to the other orthogonal codeword. The subcarrier group #1 and the subcarrier group #2 each include 6 subcarriers adjoining each other in frequency and time axes. The subcarrier group #1 and the subcarrier group #2 use the same time axis, but are spaced apart from each other by a predetermined gap in a frequency axis. As it is assumed in FIG. 5A that the modulation symbol streams are generated by sign inversion, the repeater 312 outputs "+1 +1 -1 -1 +1 +1" and "-1 -1 +1 +1 -1 -1." Therefore, modulation symbols of the "+1 +1 -1 -1 +1 +1" are individually assigned to symbol units constituting the subcarrier group #1. Also, modulation symbols of the "-1 -1 +1 +1 -1 -1" are individually assigned to symbol units included in the subcarrier group #2.

It is illustrated in FIG. 5A that the modulation symbols are individually assigned to symbol units of the corresponding subcarrier group. In FIG. 5A, circled numbers assigned to respective symbol units represent the arrangement order of the modulation symbols.

Referring next to FIG. 5B, a subcarrier group #1 and a subcarrier group #2 are assigned to a subchannel for transmitting a NACK signal as a response signal. That is, the subcarrier group #1 is assigned to one of the two orthogonal codewords provided from the repeater 312, and the subcarrier group #2 is assigned to the other orthogonal codeword. The subcarrier group #1 and the subcarrier group #2 each included 6 subcarriers adjoining each other in frequency and time axes. The subcarrier group #1 and the subcarrier group #2 use the same time axis, but are spaced apart from each other by a predetermined gap in a frequency axis. As it is assumed in FIG. 5B that the modulation symbol streams are generated by sign inversion, the repeater 312 outputs "+1 -1 -1 +1 +1 -1" and "-1 +1 +1 -1 -1 +1." Therefore, modulation symbols of the "+1 -1 -1 +1 +1 -1" are individually assigned to symbol units constituting the subcarrier group #1. Also, modulation symbols of the "-1 +1 +1 -1 -1 +1" are individually assigned to symbol units constituting the subcarrier group #2.

It is illustrated in FIG. 5B that the modulation symbols are individually assigned to symbol units of the corresponding subcarrier group. In FIG. 5B, circled numbers assigned to respective symbol units represent the arrangement order of the modulation symbols.

### B-2. Structure and Operation of Receiver

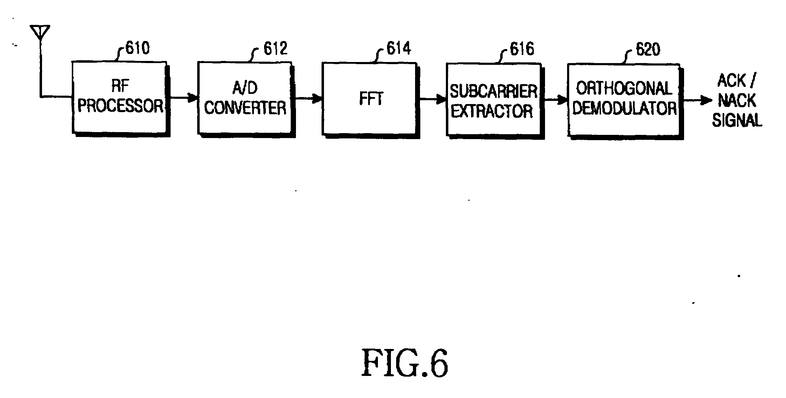

FIG. 6 is a block diagram illustrating a reception apparatus according to an embodiment of the present invention. The reception apparatus of FIG. 6 extracts modulation symbol streams transmitted through a particular subchannel from a reception signal, and detects a response signal for a data frame transmitted by the extracted modulation symbol streams.

Referring to FIG. 6, a data frame transmitted to each user is received via an antenna. The received data frame is converted into a baseband signal by an RF processor 610, and then provided to an analog-to-digital converter (A/D) converter 612. The data frame digital-converted by the A/D converter 612 is delivered to an FFT block 614. The data frame is restored by FFT processing through the FFT block 614, and the restored data frame is provided to a subcarrier extractor 616. The subcarrier extractor 616 searches subchannels included in the data frame for subchannels assigned for transmitting a response signal, and extracts modulation symbol streams for the response signal from the respective subchannels. If a response signal is transmitted as described with reference to FIGs. 5A and 5B, the subcarrier extractor 616 extracts two modulation symbol streams transmitted through a subcarrier group #1 and a subcarrier group #2. The modulation symbol streams extracted in this manner are provided to an orthogonal demodulator 620.

The orthogonal demodulator 620 measures correlation values between respective orthogonal codes used for orthogonally modulating a response signal in the transmission side and the two modulation symbol streams. The orthogonal codes use here are identical to the orthogonal codes defmed in the transmission apparatus. That is, the orthogonal codes used here have the same length as that of the first and second orthogonal codes used in the transmission apparatus, and can be generated in the same manner. Through the measurement, the orthogonal demodulator 620 determines an orthogonal code having the largest correlation value.

By determining an orthogonal code used for a modulation symbol stream in this manner, it is possible to identify a response signal indicated by the orthogonal code. That is, if the orthogonal code is a first orthogonal code used in the transmission side, the orthogonal demodulator 620 outputs an ACK signal as a response signal. However, if the orthogonal code is a second orthogonal code used in the transmission side, the orthogonal demodulator 620 outputs a NACK signal as the response signal. Here, the orthogonal demodulator 620 should combine a plurality of modulation symbol streams by demodulating the plurality of modulation symbol streams, to thereby obtain a frequency diversity effect, as described above.

### Implementation of Orthogonal Demodulator

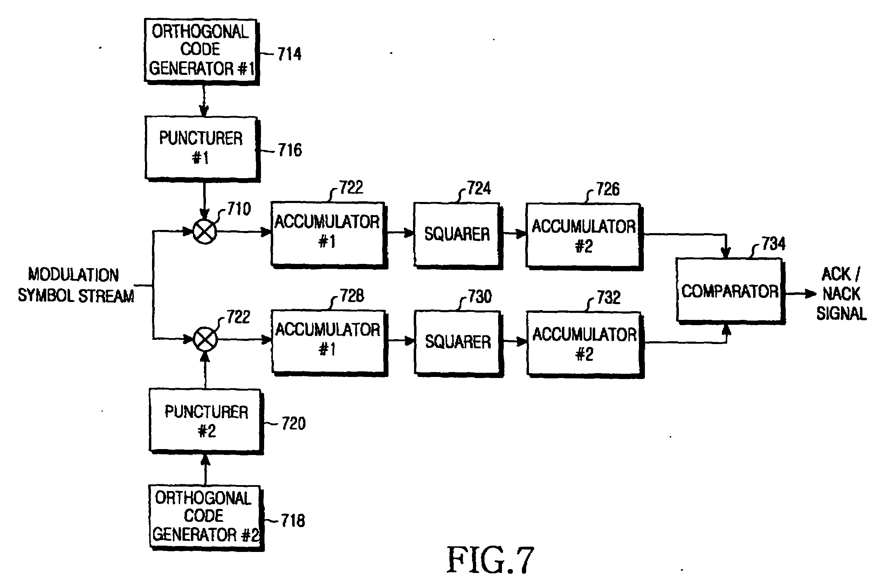

FIG. 7 illustrates an implementation of the orthogonal demodulator illustrated in FIG. 6. The orthogonal demodulator proposed in FIG. 7 detects energies for modulation symbol streams for each orthogonal code, and selects a signal having the highest energy by comparing the detected energies. Accordingly, the orthogonal demodulator multiplies a received modulation symbol stream by each of two orthogonal codes generated in a receiver, accumulates the multiplied values, and then compares their squared values. When the modulation symbol stream was repeated before being transmitted, the orthogonal demodulator accumulates the respective squared values as many times as the number of repetitions, and selects a signal having the largest accumulated value by comparing the accumulated values. By using the energy detection method, the orthogonal demodulator does not require separate channel estimation, preventing overhead such as a pilot and increasing a processing speed.

Referring to FIG. 7, a first orthogonal code generator 714 and a first puncturer 716 generate a first orthogonal codeword corresponding to an ACK signal as a response signal. A second orthogonal code generator 718 and a second puncturer 720 generate a second orthogonal codeword corresponding to a NACK signal as the response signal. The first orthogonal codeword and the second orthogonal codeword have the same length as the number of modulation symbols included in a received modulation symbol stream. That is, a length of the first and second orthogonal codewords corresponds to the number of symbol units included in one subcarrier group. Here, the first orthogonal codeword and the second codeword are orthogonal with each other.

More specifically, the first orthogonal code generator 714 and the second orthogonal code generator 718 generate a pair of orthogonal codewords, i.e., two orthogonal codewords, from an orthogonal code set of Walsh-Hadamard. Here, the first orthogonal code generator 714 generates an orthogonal codeword corresponding to an ACK signal having a value of '0' among the two orthogonal codewords, and the second orthogonal code generator 718 generates an orthogonal codeword corresponding to a NACK signal having a value of '1' among the two orthogonal codewords. The pair of orthogonal codewords selected from the orthogonal code set should maintain orthogonality therebetween, even though partial bits therein are punctured. The orthogonal codeword generated from the first orthogonal code generator 714 is provided to the first puncturer 716, and the orthogonal codeword generated from the second orthogonal code generator 718 is provided to the second puncturer 720. The first puncturer 716 outputs a first orthogonal codeword by puncturing bits in a position used for puncturing in a transmission side from the orthogonal codeword. The second puncturer 720 outputs a second orthogonal codeword by puncturing bits in a position used for puncturing in the transmission side from the orthogonal codeword. For example, assuming that a length of orthogonal codewords generated from the first and second orthogonal code generators 714 and 718 is 8 and the number of modulation symbols constituting one modulation symbol stream is 6, the first and second puncturers 716 and 720 each puncture 2 bits in their input orthogonal codewords. Meanwhile, it is clear that puncturing is not needed when the length of orthogonal codeword is equal to the length of modulation symbol stream.

The first orthogonal codeword punctured by the first puncturer 716 is provided to a first multiplier 710 included in a first correlator, and the second orthogonal codeword punctured by the second puncturer 720 is provided to a second multiplier 712 included in a second correlator. Further, the received modulation symbol streams are equally provided to the first multiplier 710 and the second multiplier 712.

As the modulation symbol stream is repeated in the transmission side and then transmitted through a plurality of subchannels, a plurality of modulation symbol streams will be sequentially provided to the first multiplier 710 and the second multiplier 712.

In the following description, the number of modulation symbol streams provided to the first multiplier 710 and the second multiplier 712 will be limited to 2, for example. However, even though the number of the modulation symbol streams is larger than 2, the structure and operation proposed in the present invention can be equally applied. The two modulation symbol streams sequentially input to the first multiplier 710 and the second multiplier 712 will be referred to as a first symbol stream and a second symbol stream according to their input order.

The first correlator includes the first multiplier 710, a first accumulator 722, a squarer 724, and a second accumulator 726. The first correlator sequentially receives the first modulation symbol stream and the second modulation symbol stream. The first correlator calculates correlation values between the punctured first orthogonal codeword with the first modulation symbol stream and the second modulation symbol stream, and accumulates the correlation values into one correlation value. The second correlator includes the second multiplier 712, a first accumulator 728, a squarer 730, and a second accumulator 732. The second correlator sequentially receives the first modulation symbol stream and the second modulation symbol stream. The second correlator calculates correlation values between the punctured second orthogonal codeword with the first modulation symbol stream and the second modulation symbol stream, and accumulates the correlation values into one correlation value.

A detailed operation of the first correlator will now be described. The first multiplier 710 multiplies the first modulation symbol stream by the punctured first orthogonal codeword, and provides the multiplication result values to the first accumulator 722. The first accumulator 722 is provided with as many multiplication result values as the number of modulation symbols included in the first modulation symbol stream from the first multiplier 710, and accumulates the result values into one value. The squarer 724 squares the value output from the first accumulator 722, thereby acquiring an energy value, i.e., a correlation value between a modulation symbol stream and an orthogonal codeword corresponding to an ACK signal. The correlation value acquired in this way is provided to the second accumulator 726.

The second modulation symbol stream received next is multiplied by the punctured first orthogonal codeword by the first multiplier 710. The multiplication result values are provided to the first accumulator 722, and the first accumulator 722 accumulates the multiplication result values into one value. The squarer 724 squares even the second value output from the first accumulator 722, thereby acquiring an energy value.

The correlation value acquired by the second modulation symbol stream is provided to the second accumulator 726. The second accumulator 726 accumulates the correlation value acquired by the first modulation symbol stream and the correlation value acquired by the second modulation symbol stream, into one correlation value.

A detailed operation of the second correlator will now be described. The second multiplier 712 multiplies the first modulation symbol stream by the punctured second orthogonal codeword, and provides the multiplication result values to the first accumulator 728. The first accumulator 728 is provided with as many multiplication result values as the number of modulation symbols included in the first modulation symbol stream from the second multiplier 712, and accumulates the result values into one value. The squarer 730 squares the value output from the first accumulator 728, thereby acquiring an energy value, i.e., a correlation value between a modulation symbol stream and an orthogonal codeword corresponding to a NACK signal. The correlation value acquired in this way is provided to the second accumulator 732.

The second modulation symbol stream received is multiplied by the punctured second orthogonal codeword by the second multiplier 712. The multiplication result values are provided to the first accumulator 728, and the first accumulator 728 accumulates the multiplication result values into one value. The squarer 724 squares even the second value output from the first accumulator 728, thereby acquiring an energy value. The correlation value acquired by the second modulation symbol stream is provided to the second accumulator 732. The second accumulator 732 accumulates the correlation value acquired by the first modulation symbol stream and the correlation value acquired by the second modulation symbol stream, into one correlation value.

A comparator 734 compares the two correlation values output from the first and second correlators, selects a larger correlation value out of the two correlation values, and calculates the larger correlation value to determine whether a first orthogonal codeword was used or a second orthogonal codeword was used. If it is determined that the first orthogonal codeword was used, the comparator 734 outputs an ACK signal. However, if it is determined that the second orthogonal codeword was used, the comparator 734 outputs a NACK signal.

A description of the foregoing embodiment has been limited to a case where multiple modulation symbol streams are received. However, when one modulation symbol stream is used, the orthogonal demodulator can be implemented by simply removing the second accumulators illustrated in FIG. 7. In addition, when more than two modulation symbol streams are received, all operations are equal to the operations described above, except for an increase in the values accumulated in the second accumulators.

### B-3. Operation of Transmission/Reception Apparatus

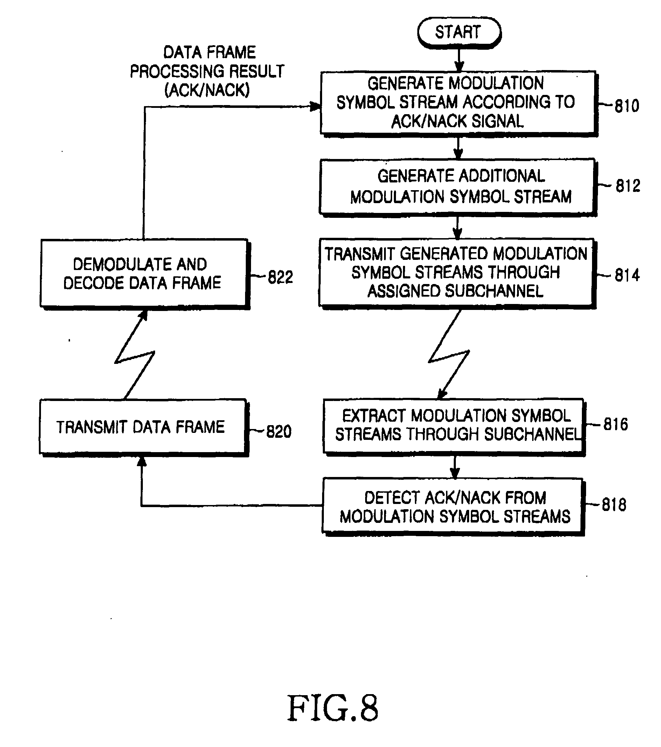

FIG. 8 is a flowchart illustrating operations of a transmission apparatus and a reception apparatus according to an embodiment of the present invention. More specifically, in FIG 8, steps 810 to 814 and step 822 are procedures performed in the transmission apparatus, and steps 816 to 820 are procedures performed in the reception apparatus.

Referring to FIG. 8, in step 810, the transmission apparatus is provided with a processing result (ACK/NACK) on a received data frame. Further, the transmission apparatus generates a modulation symbol stream for the processing result, i.e., an ACK or NACK signal. The generation of the modulation symbol stream can be achieved by an orthogonal modulation scheme using an orthogonal codeword. In step 812, the transmission apparatus additionally generates modulation symbol streams to be transmitted, using the generated modulation symbol stream. The additional generation of the modulation symbol streams can be determined according to if the generated modulation symbol stream was repeatedly transmitted through an assigned subchannel.

In order to obtain a frequency diversity effect through an assigned subchannel, it is necessary to generate at least one additional modulation symbol stream. However, the step of generating an additional modulation symbol stream can be omitted. In step 814, the transmission apparatus assigns corresponding subchannels to the modulation symbol stream and the additional modulation symbol stream. The transmission apparatus transmits the modulation symbol stream and the additional modulation symbol stream through the assigned subchannels. For reference, a procedure between steps 814 and 816 is developed over a wireless channel.

In step 816, the reception apparatus extracts modulation symbol streams from subchannels assigned for transmission of a response signal. The extracted modulation symbol streams can be single or plural in number.

In step 818, the reception apparatus detects a response signal to be transmitted by the transmission apparatus from the extracted modulation symbol streams. The detection of the response signal can be achieved by a procedure for calculating correlation values between the modulation symbol streams and the orthogonal codewords used for orthogonal modulation in the transmission apparatus, and determining which response signal is orthogonal-modulated using an orthogonal codeword having the largest correlation value. If the orthogonal codeword having the largest correlation value is a first orthogonal codeword (an orthogonal codeword used for orthogonal-modulating an ACK signal) in the transmission apparatus, the reception apparatus detects an ACK signal as a response signal. However, if the orthogonal codeword having the largest correlation value is a second orthogonal codeword (an orthogonal codeword used for orthogonal-modulating a NACK signal) in the transmission apparatus, the reception apparatus detects a NACK signal as a response signal.

In step 820, the reception apparatus generates a data frame to be transmitted, according to the detected response signal, and transmits the generated data frame to the transmission apparatus. If an ACK signal is detected as the response signal, the data frame is generated with the data frame to be transmitted next. However, if a NACK signal is detected as the response signal, the data frame is generated with the data that the transmission apparatus failed to receive. For reference, a procedure between steps 820 and 822 is developed over a wireless channel.

In step 822, the transmission apparatus performs demodulation and decoding on the data frame received from the reception apparatus. After performing the demodulation and decoding, the transmission apparatus outputs the processing result on the data frame so as to perform step 810.

As described above, the present invention orthogonally modulates a processing result on a received data frame before transmission, thereby providing numerous advantages.

First, the present invention enables non-coherent detection for a response signal, thereby reducing overhead that is normally necessary for channel estimation, such as a pilot, and enabling fast processing in a physical channel.

Second, compared with the conventional scheme having great a large overhead, the present invention rapidly transmits only necessary information, thereby increasing efficiency of radio resources.

While the present invention has been shown and described with reference to certain preferred embodiments thereof, it will be understood by those skilled in the art that various changes in form and details may be made therein without departing from the spirit and scope of the present invention as defmed by the appended claims.

## Claims

1. A method for transmitting a processing result on a received data frame in an Orthogonal Frequency Division Multiple Access (OFDMA) mobile communication system, the method comprising the steps of:
selecting an orthogonal codeword corresponding to the processing result among predetermined orthogonal codewords; and
transmitting the selected orthogonal codeword through at least one subcarrier group assigned for transmitting the processing result.

2. The method of claim 1, wherein a length of the orthogonal codeword is determined according to a number of data symbol units included in the at least one subcarrier group, and the predetermined orthogonal codewords are orthogonal with each other.

3. The method of claim 1, wherein the predetermined orthogonal codewords include an orthogonal codeword for the processing result, indicating a successful reception of the data frame, and an orthogonal codeword for the processing result, indicating a failed reception of the data frame.

4. The method of claim 1, further comprising the step of, when a plurality of subcarrier groups are assigned for transmitting the processing result, generating at least one additional orthogonal codeword from the selected orthogonal codeword, and transmitting the selected orthogonal codeword and the at least one additional orthogonal codeword through the assigned subcarrier group.

5. The method of claim 4, wherein the subcarrier groups are located in the same time axis, and are spaced apart from each other by a predetermined gap in a frequency axis.

6. The method of claim 4, wherein the additional orthogonal codeword is generated by inverting the selected orthogonal codeword.

7. The method of claim 4, wherein the additional orthogonal codeword is generated by cyclically shifting the selected orthogonal codeword a predetermined number of times.

8. The method of claim 4, wherein the additional orthogonal codeword is generated by interleaving the selected orthogonal codeword according to a predetermined pattern.

9. The method of claim 1, wherein the orthogonal codeword is a Walsh-Hadamard codeword.

10. The method of claim 1, wherein the step of selecting the orthogonal codeword comprises the steps of:
generating a first orthogonal codeword corresponding to a successful reception of the data frame;
puncturing the first orthogonal codeword, such that a length of the first orthogonal codeword corresponds to a number of symbol units included in the subcarrier group;
generating a second orthogonal codeword corresponding to a failed reception of the data frame;
puncturing the second orthogonal codeword, such that a length of the second orthogonal codeword corresponds to the number of symbol units included in the subcarrier group; and
selecting one of the punctured first orthogonal codeword and the punctured second orthogonal codeword as a modulation symbol stream corresponding to the processing result.

11. A transmission apparatus for transmitting a processing result on a received data frame in an Orthogonal Frequency Division Multiple Access (OFDMA) mobile communication system, the apparatus comprising:
an orthogonal modulator for selecting an orthogonal codeword corresponding to the processing result among predetermined orthogonal codewords; and
a subcarrier assigner for assigning at least one subcarrier group for transmitting the selected orthogonal codeword.

12. The method of claim 11, wherein a length of the orthogonal codeword is determined according to a number of data symbol units included in the at least one subcarrier group, and the predetermined orthogonal codewords are orthogonal with each other.

13. The transmission apparatus of claim 11, wherein the predetermined orthogonal codewords comprise:
an orthogonal codeword for the processing result, indicating a successful reception of the data frame; and
an orthogonal codeword for the processing result, indicating a failed reception of the data frame.

14. The transmission apparatus of claim 11, further comprising:
a repeater for generating at least one additional orthogonal codeword from the selected orthogonal codeword,
wherein the subcarrier assigner assigns at least two subcarrier groups for transmitting the selected orthogonal codeword and at least one additional orthogonal codeword.

15. The transmission apparatus of claim 14, wherein the subcarrier groups is located in a same time axis, and are spaced apart from each other by a predetermined gap in a frequency axis.

16. The transmission apparatus of claim 14, wherein the at least one additional orthogonal codeword is generated by inverting the selected orthogonal codeword.

17. The transmission apparatus of claim 14, wherein the at least one additional orthogonal codeword is generated by cyclically shifting the selected orthogonal codeword a predetermined number of times.

18. The transmission apparatus of claim 14, wherein the at least one additional orthogonal codeword is generated by interleaving the selected orthogonal codeword according to a predetermined pattern.

19. The transmission apparatus of claim 11, wherein the orthogonal codeword is a Walsh-Hadamard codeword.

20. The transmission apparatus of claim 11, wherein the orthogonal modulator comprises:
a first orthogonal code generator for generating a first orthogonal codeword corresponding to a successful reception of the data frame;
a first puncturer for puncturing the first orthogonal codeword such that a length of the first orthogonal codeword corresponds to a number of symbol units included in the subcarrier group;
a second orthogonal code generator for generating a second orthogonal codeword corresponding to a failed reception of the data frame;
a second puncturer for puncturing the second orthogonal codeword such that a length of the second orthogonal codeword corresponds to the number of symbol units included in the subcarrier group; and
a modulation symbol selector for selecting one of the punctured first orthogonal codeword and the punctured second orthogonal codeword as a modulation symbol stream corresponding to the processing result.

21. A method for receiving a processing result on a transmitted data frame in an Orthogonal Frequency Division Multiple Access (OFDMA) mobile communication system, the method comprising the steps of:
extracting an orthogonal-modulated orthogonal codeword from at least one subcarrier group assigned for transmitting the processing result; and
checking the processing result according to an orthogonal codeword having a largest correlation value with the extracted orthogonal codeword among predetermined orthogonal codewords.

22. The method of claim 21, wherein a length of the orthogonal codeword is determined according to a number of data symbol units included in the at least one subcarrier group, and the predetermined orthogonal codewords are orthogonal with each other.

23. The method of claim 21, wherein the predetermined orthogonal codewords include a first orthogonal codeword for the processing result, indicating a successful reception of the frame data, and a second orthogonal codeword for the processing result, indicating a failed reception of the data frame.

24. The method of claim 21, wherein the step of checking the processing result comprises the steps of:
generating a first orthogonal codeword corresponding to a successful reception of the data frame;
puncturing the first orthogonal codeword such that a length of the first orthogonal codeword corresponds to the number of symbol units included in the at least one subcarrier group;
generating a second orthogonal codeword corresponding to a failed reception of the data frame;
puncturing the second orthogonal codeword such that a length of the second orthogonal codeword corresponds to the number of symbol units included in the at least one subcarrier group;
calculating a correlation value between the extracted orthogonal codeword and the first orthogonal codeword;
calculating a correlation value between the extracted orthogonal codeword and the second orthogonal codeword;
comparing the calculated two correlation values; and
determining the processing result according to an orthogonal codeword having the larger correlation value.

25. The method of claim 24, wherein the step of determining the processing result comprises the steps of:
when a plurality of subcarrier groups are assigned for transmitting the processing result, calculating a first correlation value by accumulating correlation values between orthogonal codewords extracted for the subcarrier groups and the first orthogonal codeword;
calculating a second correlation value by accumulating correlation values between orthogonal codewords extracted for the subcarrier groups and the second orthogonal codeword; and
determining the processing result according to an orthogonal codeword having a larger correlation value out of the first correlation value and the second correlation value.

26. The method of claim 25, wherein the subcarrier groups are located in a same time axis, and are spaced apart from each other by a predetermined gap in a frequency axis.

27. The method of claim 25, wherein the orthogonal codewords extracted for the subcarrier groups have different codes.

28. The method of claim 21, wherein the orthogonal codeword is a Walsh-Hadamard codeword.

29. An apparatus for receiving a processing result on a transmitted data frame in an Orthogonal Frequency Division Multiple Access (OFDMA) mobile communication system, the apparatus comprising:
a subcarrier extractor for extracting an orthogonal-modulated orthogonal codeword from at least one subcarrier group assigned for transmitting the processing result; and
an orthogonal demodulator for determining the processing result according to an orthogonal codeword having a largest correlation value with the extracted orthogonal codeword among predetermined orthogonal codewords;
wherein a length of the orthogonal codeword is determined according to a number of symbol units included in the at least one subcarrier group, and the predetermined orthogonal codewords are orthogonal with each other.

30. The method of claim 29, wherein a length of the orthogonal codeword is determined according to a number of data symbol units included in the at least one subcarrier group, and the predetermined orthogonal codewords are orthogonal with each other.

31. The apparatus of claim 29, wherein the predetermined orthogonal codewords comprise:
a first orthogonal codeword for the processing result, indicating a successful reception of the frame data; and
a second orthogonal codeword for the processing result, indicating a failed reception of the data frame.

32. The apparatus of claim 29, wherein the orthogonal demodulator comprises:
a first orthogonal code generator for generating a first orthogonal codeword corresponding to a successful reception of the data frame;
a first puncturer for puncturing the first orthogonal codeword such that a length of the first orthogonal codeword corresponds to the number of symbol units included in the at least one subcarrier group;
a second orthogonal code generator for generating a second orthogonal codeword corresponding to a failed reception of the data frame;
a second puncturer for puncturing the second orthogonal codeword such that a length of the second orthogonal codeword corresponds to the number of symbol units included in the at least one subcarrier group;
a first correlator for calculating a correlation value between the extracted orthogonal codeword and the first orthogonal codeword;
a second correlator for calculating a correlation value between the extracted orthogonal codeword and the second orthogonal codeword; and
a comparator for comparing the two calculated correlation values, and determining the processing result according to an orthogonal codeword having a larger correlation value.

33. The apparatus of claim 32, wherein the first correlator, when a plurality of subcarrier groups are assigned for transmitting the processing result, calculates one correlation value by accumulating correlation values between orthogonal codewords extracted for the subcarrier groups and the first orthogonal codeword.

34. The apparatus of claim 33, wherein the second correlator, when the plurality of subcarrier groups are assigned for transmitting the processing result, calculates one correlation value by accumulating correlation values between orthogonal codewords extracted for the subcarrier groups and the second orthogonal codeword.

35. The apparatus of claim 34, wherein the subcarrier groups are located in a same time axis, and are spaced apart from each other by a predetermined gap in a frequency axis.

36. The apparatus of claim 35, wherein the orthogonal codewords extracted for the subcarrier groups have different codes.

37. The apparatus of claim 29, wherein the orthogonal codeword is a Walsh-Hadamard codeword.
